# EUROPEAN PATENT APPLICATION

(11) **EP 2 543 647 A1**
(43) Date of publication of application: **09.01.2013**
(21) Application number: 11750436.5
(22) Date of filing: 31.01.2011
(51) Int. Cl.: C03C 27/06, C03C 27/12, E06B 7/12

(54) **HEAT RAY-BLOCKING MULTILAYERED GLASS**

(30) Priority: 02.03.2010 JP 2010044895
(71) Applicant: Bridgestone Corporation, Tokyo 104-8340 (JP)
(72) Inventor: KUWANO Koji, Yokohama-shi Kanagawa 244-8510 (JP); HASHIMOTO Masao, Yokohama-shi Kanagawa 244-8510 (JP); SUZUKI Yuji, Yokohama-shi Kanagawa 244-8510 (JP); KOMORI Yushi, Yokohama-shi Kanagawa 244-8510 (JP)
(74) Representative: Waldren, Robin Michael
(86) International application number: PCT/JP2011/051898
(87) International publication number: WO 2011/108323

(57) **Abstract**

A solar control double glass which is capable of preventing occurrence of dew condensation is provided. The solar control double glass comprises two glass plates (A), (B) superposed through a spacer 24 therebetween, a gap between the two glass plates forming a hollow layer 20, wherein an adhesive resin layer 18 and a heat-ray absorption layer 14 comprising a tungsten compound are provided on a surface on the hollow layer 20 side of the glass plate (A) 11 in this order, and a heat-ray reflection layer 16 is provided on a surface on the hollow layer 20 side of the glass plate (B) 12.

## Description

### Technical Field

The present invention relates to a solar control double glass having excellent dew proofing property, which is used as a window glass employed in construction and the like.

### Background of the Art

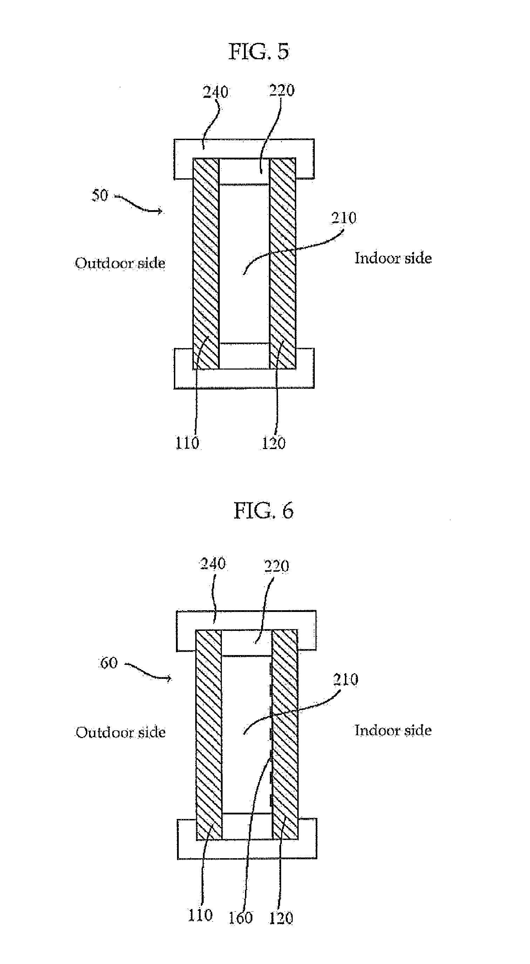

In the past, a double glass has been used in a window of construction such as residential and office buildings and of a vehicle. The double glass 50 generally has a structure that two glass plates 110, 120 are arranged in parallel with each other through a hollow layer 210 therebetween, as shown in a schematic sectional view illustrated in Fig. 5. The hollow layer 210 is formed by arranging two glass plates 110, 120 through a spacer 220 in the form of frame. A peripheral part of each of the two glass plates 110, 120 is fixed on a grazing channel 240, which is a material for interposition used when a glass is mounted on a sash frame. The existence of the hollow layer 210 suppresses entrance and exit of heat generated through the double glass 50, which enables to give thermal insulation properties to the whole double glass 50. Therefore, the use of the double glass 50 brings about reduction of consumption energy of a cooling equipment and a heating apparatus.

Recently, a double glass having further performance shielding heat-ray contained in solar ray is known. For instance, a double glass which has a heat-ray shielding film (also referred to as a Low-E film) obtained by lamination of a metal oxide film, a noble metal film/metal oxide film mainly consisting of metal oxide film and Ag film, these films being formed on the surfaces on the hollow layer side of the double glass, has been developed and put to practical use (e.g., Patent Document 1). The Low-E film has a function (thermal insulation properties) of transmitting light in visible region of solar ray and reflecting far infrared rays emitted from inside of a room by a heater or the like to prevent the heat of the rays from escaping.

When the Low-E film is provided on the outdoor side, it is capable of shielding external heat to enhance cooling efficiency, whereas when the Low-E film is provided on the indoor side, it shows enhancement of thermal insulation properties to enhance heating efficiency. Thereby, energy consumed by cooling and heating can be further reduced.

### Prior Art Documents

### Patent Document

Patent Document 1: JP2002-226237 A

### Summary of the Invention

### Problem to be solved by the Invention

The solar control double glass as mentioned above shows as a unit a low temperature per se, and therefore when there is difference between a room temperature and a temperature on a surface on the room inside of the double glass, dew concentration is apt to occur on the surface of the glass plate or on a minute gap between the glass plate and the grazing channel. The dew concentration occasionally brings about occurrence of fungus or corrosion to provide sanitary concerns and reduction of durability.

In order to resolve the problems of the sanitary concerns and the reduction of durability, countermeasures such as increase of a thickness of the spacer and avoidance of increasing in size of the double glass have been made. The countermeasures increases a thickness of a sash to bring about practical disadvantages such as increases of weight and volume, and further restrictions of appearance and size, whereby free degree (flexibility) in designs of construction and automobile is restricted.

The object of the present invention is to provide a solar control double glass which is a double glass having a heat-ray reflection layer thereon and which has excellent dew proofing property.

### Means for solving problem

The object can be attained by a solar control double glass which comprises two glass plates (A), (B) superposed through a spacer therebetween, a gap between the two glass plates forming a hollow layer,
wherein an adhesive resin layer and a heat-ray absorption layer comprising a tungsten compound are provided on a surface on the hollow layer side of one glass plate (A) in this order, and a heat-ray reflection layer is provided on a surface on the hollow layer side of another glass plate (B). By the adoption of the structure of the solar control double glass, a heat-ray entered from room inside and outside is absorbed by the heat-ray absorption layer, and the absorbed heat-ray is transferred into the glass plate and the grazing channel, whereby the whole solar control double glass can be maintained at higher temperature compared with a conventional double glass. Thereby, the difference between a temperature of outdoor air and that of the solar control double glass can be reduced, which prevents occurrence of dew concentration.

The embodiments of the solar control double glass according to the present invention are described as follows:
(1) Another glass plate (C) is further provided on a surface on the hollow layer side of the heat-ray absorption layer through an adhesive resin layer.
(2) A desiccant is incorporated in the spacer.
(3) The tungsten compound is tungsten oxide and/or composite tungsten oxide.
(4) The tungsten oxide is represented by a general formula W_{y}O_{z} wherein W represents tungsten, O represents oxygen, and y and z satisfy the condition of 2.2≤z/y≤2.999, and the composite tungsten oxide is represented by a general formula MₓW_{y}O_{z} wherein M represents at least one element selected from H, He, alkaline metals, alkaline-earth metals, rare-earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi and I, W represents tungsten, O represents oxygen, and x, y and z satisfy the conditions of 0.001≤x/y≤1 and 2.2≤z/y≤3.
(5) M is cesium.
(6) The heat-ray reflection layer comprises at least a laminate of a metal oxide layer, a silver-containing layer and a metal oxide layer (a metal oxide layer/ a silver-containing layer/ a metal oxide layer).
(7) The adhesive resin layer comprises ethylene-vinyl acetate copolymer as a major ingredient.
(8) A peripheral part of the solar control double glass is fixed on a grazing channel.

### Effect of the Invention

In the solar control double glass of the invention, a heat-ray absorbed by the heat-ray absorption layer is transferred into the glass plate and the grazing channel, whereby the difference between a temperature of outdoor air and that of the solar control double glass can be reduced. Hence, the temperature of the surface of the glass plate and the temperature of the grazing channel is unlikely to become a temperature not higher than dew point, which prevents occurrence of dew concentration. The prevention of dew concentration further prevents occurrence of rust of metal used in the heat-ray reflection layer, and furthermore occurrence of fungus. Thus the solar control double glass which is excellent dew proofing property and durability and which is also good from a hygienic point of view can be provided.

### Brief Description of the Drawings

[Fig. 1] Fig. 1 is a schematic section view showing an embodiment of a solar control double glass according to the present invention.
[Fig. 2] Fig. 2 is a schematic section view showing another embodiment of a solar control double glass of the present invention.
[Fig. 3] Fig. 3 is a schematic section view showing another embodiment of a solar control double glass of the present invention.
[Fig. 4] Fig. 4 is a schematic section view showing another embodiment of a solar control double glass of the present invention.
[Fig. 5] Fig. 5 is a schematic section view showing a conventional embodiment of a double glass.
[Fig. 6] Fig. 6 is a schematic section view showing a conventional embodiment of a double glass on which a Low-E film is formed.

### Description of Preferred Embodiments

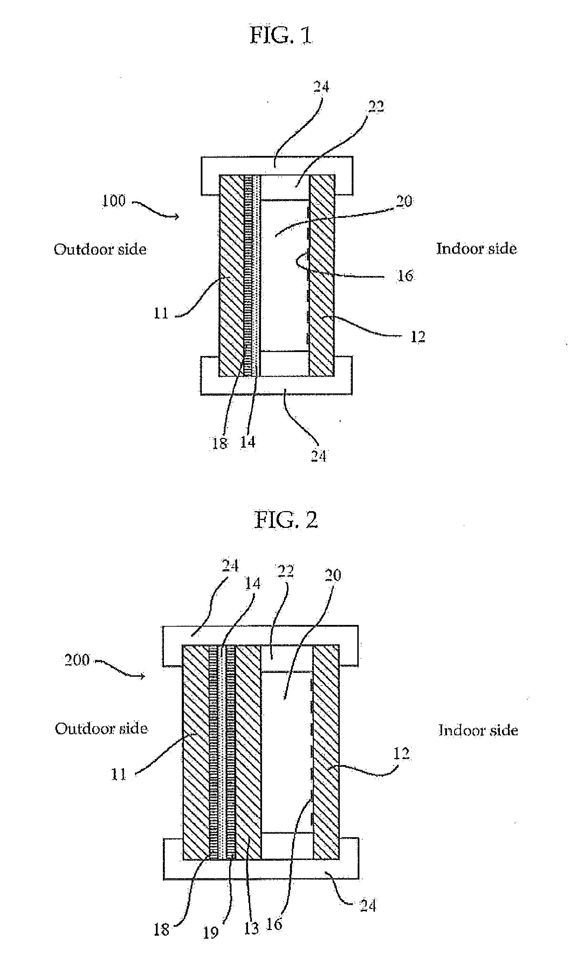

The embodiments of the present invention are explained in detail with reference of the drawings below. Fig. 1 is a schematic section view showing a typical example of embodiments of a solar control double glass according to the present invention.

In the invention, the term "glass" means overall transparent substrates, and therefore the "glass" includes glass plates and transparent plastic plates as well. Thus the solar control glass means a transparent substrate having heat-ray shielding property.

The solar control double glass 100 of the invention is composed of a glass plate 11, an adhesive resin layer 18, a heat-ray absorption layer 14, a hollow layer 20, a heat-ray reflection layer 16 and a glass plate 12 which are arranged in this order from outdoor side, as shown in Fig. 1. The hollow layer 20 is formed by facing and arranging the heat absorption layer 14 formed on the glass plate 11 through the adhesive resin layer 18 and the heat-ray reflection layer 16 formed on the glass plate 12 with each other through a spacer 22 provided on an outer peripheral part of the glass plate 12. A peripheral part of the solar control double glass 100 is fixed on a grazing channel 24, which is a material for interposition used when a glass is mounted on a sash frame.

The heat absorption layer 14 contains a tungsten compound and is capable of absorbing a heat-ray without reduction of visible light transmittance to enable enhancement of thermal insulation properties. Further the heat-ray reflection layer 16 enhances heat barrier properties and reflects a heat-ray from an indoor side to reduce cooling and heating load. Further the formation of the hollow layer 20, in which a gas such as an air having low thermal conductivity is introduced, bring s about further enhancement of thermal insulation properties.

By the adoption of the above-mentioned constitution, a heat-ray absorbed by the heat-ray absorption layer 14 is transferred into the glass plate and the grazing channel in vicinity of the heat-ray absorption layer 14 to warm the whole solar control double glass 100 including the grazing channel, with enhancement of heat barrier and thermal insulation properties of the solar control double glass 100. Since the solar control double glass 100 has high thermal insulation properties, lowering of external temperature at night scarcely has an influence over internal temperature. Hence, even if there is difference between external temperature and internal temperature, occurrence of dew concentration in the glass plate and the grazing channel can be prevented.

Fig. 2 is a schematic section view showing another embodiment of a solar control double glass according to the present invention. The solar control double glass 200 of the invention is composed of a glass plate 11, an adhesive resin layer 18, a heat-ray absorption layer 14, an adhesive resin layer 19, a glass plate 13, a hollow layer 20, a heat-ray reflection layer 16 and a glass plate 12 which are arranged in this order from outdoor side. In more detail, the adhesive resin layer 19 and the glass plate 13 are further provided on the hollow layer side of the heat-ray absorption layer 14 of the solar control double glass 100 described in Fig. 1. In this embodiment, the whole solar control double glass 200 including the glass plate 13 can be warmed, occurrence of dew concentration can be prevented.

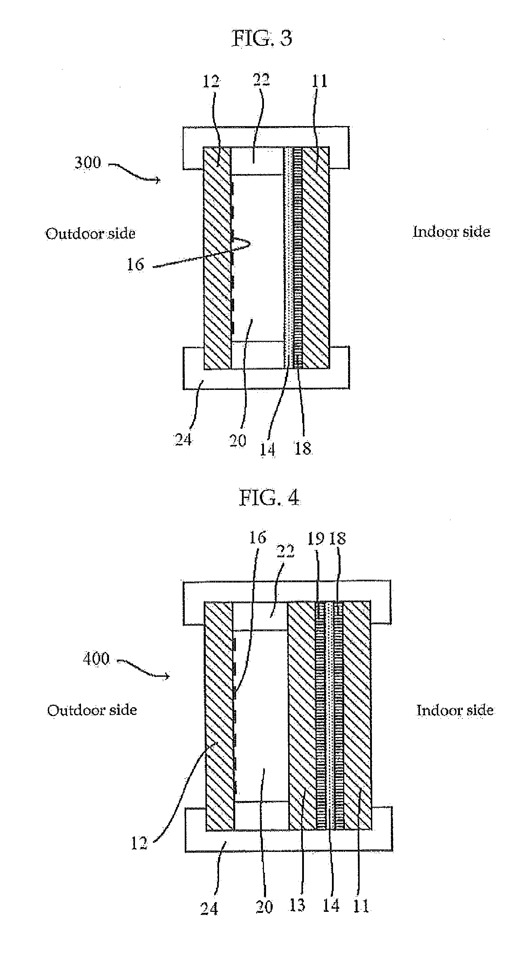

In case the solar control double glass of the invention is fixed on a window frame, it is not important problem which surface of the double glass should be arranged on indoor side or outdoor side. Even if the solar control double glass shown in Fig. 1 or 2 is arranged inversely in the indoor side and outdoor side as shown in Fig. 3 or 4, the object of the invention can be attained.

The elements of the solar control double glass are explained below.

### [Heat-ray absorption layer]

The heat-ray absorption layer contains a tungsten compound as heat-ray absorber. As the tungsten compound, tungsten oxide and/or composite tungsten oxide can be used. The use of the tungsten oxide and/or composite tungsten oxide imparts to a solar control double glass excellent heat-ray absorbing property without lowering of visible light transmission.

The tungsten oxide is generally represented by a general formula W_{y}O_{z} wherein W represents tungsten, O represents oxygen, and y and z satisfy the condition of 2.2≤z/y≤2.999. Further, the composite tungsten oxide has a composition obtained by adding to the tungsten oxide element M (M represents at least one element selected from H, He, alkaline metals, alkaline-earth metals, rare-earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi and I). Hence, free electrons are generated in W_{y}O_{z} even in case of z/y=3, and absorption properties derived from the free electrons develop in the region of near infrared rays, whereby the W_{y}O_{z} is useful as a heat-ray absorber at approx 1,000nm. In the invention, preferred is composite tungsten oxide.

In the tungsten oxide of the general formula W_{y}O_{z} wherein W represents tungsten and O represents oxygen, which is used as the heat-ray absorber of the invention, the ratio of oxygen to tungsten is preferably less than 3, and further, y and z satisfy the condition of 2.2≤z/y≤2.999. When z/y is not less than 2.2, occurrence of unnecessary WO₂ crystalline phase in the heat-ray absorber can be prevented and the chemical stability of the material can be obtained, whereby the tungsten oxide can be used in effective heat-ray absorber. In contrast, when z/y is not more than 2.999, free electrons can be generated in the required amount whereby the resultant heat-ray absorber has high efficiency.

The composite tungsten oxide is preferably represented by a general formula MₓW_{y}O_{z} wherein M represents at least one element selected from H, He, alkaline metals, alkaline-earth metals, rare-earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi and I, W represents tungsten, O represents oxygen, and x, y and z satisfy the conditions of 0.001≤x/y≤1 and 2.2≤z/y≤3, in view of stability. The alkaline metals are elements in 1st group of Periodical Table of the Elements except for hydrogen, the alkaline-earth metals are elements in 2nd group of Periodical Table of the Elements, and the rare-earth elements are Sc, Y and lanthanide elements. Particularly, from the viewpoint of enhancement of optical properties and weather resistance as a heat-ray absorber, M element is preferably one or more element selected from Cs, Rb, K, Tl, In, Ba, Li, Ca, Sr, Fe and Sn. Further the composite tungsten oxide is preferably treated with a silane coupling agent, whereby the resultant oxide shows excellent dispersing properties and hence brings about excellent near-infrared shielding properties and transparency.

When x/y which represents the addition amount of M is not less than 0.001, free electrons can be generated in a sufficient amount whereby the resultant heat-ray absorber shows sufficient heat-ray absorbing effect. The amount of free electrons is increased with increase of the addition amount of the element M, which results in enhancement of heat-ray absorbing effect, but the amount of free electrons is saturated when x/y attains approx. 1. In contrast, when x/y is not more than 1, occurrence of an impurities phase in the heat-ray absorption layer can be preferably prevented.

Also in the composite tungsten oxide represented by a general formula MₓW_{y}O_{z}, a value of z/y which represents control of oxygen amount functions in the same manner as in the heat-ray absorber represented by W_{y}O_{z}. In addition, the free electrons are provided depending on the addition amount of the element M even in case of z/y=3.0, and therefore z/y is preferably 2.2≤z/y≤3.0, more preferably 2.45≤z/y≤3.0.

In case the composite tungsten oxide particle has crystal structure of hexagonal crystal, the oxide is enhanced in transmission in visual light region and in absorption in near-infrared region.

In case a cation of element M exists in voids of hexagonal shape of the hexagonal crystal by the addition of the element M, the transmission in visual light region and the absorption in near-infrared region are enhanced. In general, the addition of element M having large ion radius brings about the formation of the hexagonal crystal, particularly the addition of Cs, K, Rb, Tl, In, Ba, Sn, Li, Ca, Sr, Fe facilitates the formation of the hexagonal crystal. Naturally, it is effective that even an addition element other than the above-mentioned elements exists in voids of the hexagonal shape formed from WO₆ units, and hence the addition element is not restricted to the above-mentioned elements.

In case the composite tungsten oxide particle having hexagonal crystal has uniform crystal structure, the addition amount of the addition element M is preferably set as a value of x/y to 0.2 to 0.5, more preferably 0.33. It is considered that x/y of 0.33 results in the addition element M being placed in all voids of the hexagonal shape.

Tungsten bronze having tetragonal or cubical crystal besides hexagonal crystal also has heat-ray absorbing effect. The absorption position in near-infrared region is apt to vary depending upon the crystal structures, and the absorption position tends to move in the longer wavelength direction in the order of tetragonal<cubical<hexagonal crystal. With this tendency, the absorption in visual light region is apt to become small in the order of hexagonal<cubical<tetragonal crystal. Therefore, in use (application) that is required to transmit highly visual light and to shield highly near-infrared ray, it is preferred to use tungsten bronze having hexagonal crystal. In addition, the surface of the tungsten oxide and/or composite tungsten oxide of the invention is preferably coated with oxide containing one or more kind of Si, Ti, Zr and Al for the purpose of enhancement of weather resistance.

The average particle size of the composite tungsten oxide fine particle is preferably in the range of 10 to 800 nm, especially 10 to 400 nm in order to retain the transparency. This is because particles having the average particle size of not more than 800 nm do not completely screen light due to scattering and therefore make it possible to retain visibility in the visible light region and simultaneously effectively transparency. In case of particularly emphasizing transparency the visible light region, it is preferred to consider the scattering of the particles. In case of considering the reduction of the scattering, the average particle size is preferably in the range of 20 to 200 nm, more preferably 20 to 100 nm.

The average particle size of the particle is carried out by observing a section view of the heat-ray absorption layer at 1,000,000-fold magnification by a transmission electron microscope and measuring diameters of circles corresponding to projected areas of at least 100 particles to determine their average value.

The tungsten oxide and/or composite tungsten oxide fine particle of the invention is, for example, prepared as follows:

The fine particle of the tungsten oxide represented by a general formula W_{y}O_{z} and/or the fine particle of the composite tungsten oxide represented by a general formula MₓW_{y}O_{z} can be obtained by subjecting a starting material of a tungsten compound to heat treatment under an inert gas or reducing gas atmosphere.

Examples of the starting material of tungsten compound preferably include tungsten trioxide powder, tungsten oxide hydrate, tungsten hexachloride powder, ammonium tungstate powder, tungsten oxide hydrate powder obtained by dissolving tungsten hexachloride in alcohol and drying it, tungsten oxide hydrate powder obtained by dissolving tungsten hexachloride in alcohol, forming precipitation by addition of water and drying the precipitation, tungsten compound powder obtained by drying an ammonium tungstate aqueous solution, and metal tungsten powder, and one or more of the examples can be also used.

In order to facilitate the preparation of the tungsten oxide, it is more preferred to use tungsten oxide hydrate powder or tungsten compound powder obtained by drying an ammonium tungstate aqueous solution. The preparation of composite tungsten oxide is more preferably carried out by using an ammonium tungstate aqueous solution or a tungsten hexachloride solution because the solution of starting material easily enables homogeneous mixing of elements to be used. Thus, the tungsten oxide and/or the composite tungsten oxide having the particle size as mentioned above can be obtained by subjecting the above-mentioned material(s) to heat treatment under an inert gas or reducing gas atmosphere.

The composite tungsten oxide represented by a general formula MₓW_{y}O_{z} can be prepared by using a starting material of tungsten oxide containing an element of M or a M-containing compound though in the same manner as the starting material of tungsten oxide of a general formula W_{y}O_{z}. In order to prepare a starting material in which used components are homogeneously mixed in molecular level, solutions of components are preferably mixed with each other. Hence it is preferred that a tungsten compound containing element M is dissolvable in a solvent such as water, or organic solvent. For example, there are mentioned tungstate, chloride, nitrate, sulfate, oxalate or oxide containing element M. However, these are not restricted, and any in the form of solution can be preferably used.

The heat treatment under an inert gas atmosphere is preferably carried out in the condition of 650°C or higher. The starting material heat-treated at 650°C or higher has sufficient coloring power and hence brings about heat-ray-shielding fine particle having excellent efficiency. Examples of the inert gas include preferably Ar, N₂. Further, the heat treatment under a reducing gas atmosphere is preferably carried out by heating a starting material at temperature of 100 to 650°C under a reducing gas atmosphere and heating at temperature of 650 to 1200°C under an inert gas atmosphere. Example of the reducing gas preferably includes H₂, but is not restricted to. In case H₂ is used as the reducing gas, a composition of the reducing gas has preferably not less than 0.1 % by volume of H₂, more preferably not less than 2% by volume of H₂. Use of not less than 0.1 % by volume of H₂ enables the reduction to effectively promote.

The material powder reduced with hydrogen contains magnelli phase and shows excellent heat-ray absorbing properties, and hence the material powder can be used as a heat-ray absorber without modification. However, since hydrogen contained in tungsten oxide is unstable, its application may be restricted in view of weather resistance. By subjecting the tungsten oxide containing hydrogen to heat treatment at temperature of 550°C or higher under an inert gas atmosphere, further a stable heat-ray absorber can be obtained. Though the atmosphere in the heat treatment is not restricted, the atmosphere preferably includes N₂ or Ar in view of industrial aspect. The heat treatment at temperature of 650°C or higher brings about formation of magnelli phase in the heat-ray absorber whereby weather resistance is enhanced.

The composite tungsten oxide of the invention has been preferably subjected to surface treatment by a coupling agent such as a silane coupling agent, a titanate coupling agent or an aluminum coupling agent. The silane coupling agent is preferred. Thereby the composite tungsten oxide becomes to have excellent compatibility with binder resin, which results in improvement of various properties such as transparency, heat-ray absorbing properties.

Examples of the silane coupling agents include γ-chloropropylmethoxysilane, vinyltriethoxysilane, vinyl-tris(β-methoxyethoxy)silane, γ-methacryloxypropyltrimethoxysilane, vinyltriacetoxysilane, γ-glycidoxypropyltrimethoxysilane, γ-glycidoxypropyltriethoxysilane, β-(3,4-epoxycyclohexyl)ethyltrimethoxysilane, vinyltrichlorosilane, γ-mercaptopropylmethoxysilane, γ-aminopropyltriethoxysilane, N-β-(aminoethyl)-γ-aminopropyltrimethoxysilane, trimethoxyacrylsilane. Preferred are vinyltris(β-methoxyethoxy)silane, γ-methacryloxypropyltrimethoxysilane, vinyltriacetoxysilane, trimethoxyacrylsilane. The silane coupling agents can be used singly, or in combination of two or more kinds. The content of the silane coupling agent is preferably in an amount of 5 to 20 parts by weight based on 100 parts by weight of the composite tungsten oxide.

As the binder resin, known thermoplastic resin, ultraviolet curable resin and thermosetting resin can be used. Examples of the binder resin include transparent synthetic resins such as silicone resin, fluoro resin, olefin resin, acrylic resin, polyester resin, epoxy resin, urethane resin, phenol resin, resorcinol resin, urea resin, melamine resin, furan resin. Preferred are silicone resin, fluoro resin, olefin resin, acrylic resin in view of weather resistance. The thermoplastic resin and ultraviolet curable resin, especially ultraviolet curable resin is preferred. The ultraviolet curable resin can be preferably cured in a short time to show excellent productivity. The resin composition contains a thermal polymerization initiator or photopolymerization initiator depending upon curing methods. Further it may contain a curing agent such as a polyisocyanate compound.

The content of the (composite) tungsten oxide of the heat-ray absorption layer is preferably in an amount of 10 to 500 parts by weight, further preferably 20 to 500 parts by weight, especially 30 to 300 parts by weight based on 100 parts by weight of the binder resin.

The heat-ray absorption layer may contain a colorant with the exception of the (composite) tungsten oxide. The colorant generally has absorption maximum wavelength in the range of 800 to 1200nm. Examples of the colorant include phthalocyanine dyes, metal complexes dyes, nickel dithioren complexes dyes, cyanine dyes, squalirium dyes, polymethine dyes, azomethine dyes, azo dyes, polyazo dyes, diimmonium dyes, aminium dyes, anthraquinone dyes. Particularly, preferred are cyanine dyes, phthalocyanine dyes and diimmonium dyes. These colorants can be employed singly or in combination.

The content of the colorant is preferably in an amount of 0.1 to 20 parts by weight, further preferably 1 to 20 parts by weight, especially 1 to 10 parts by weight based on 100 parts by weight of the binder resin.

The preparation of the heat-ray absorption layer is preferably carried out by applying a resin composition including (composite) tungsten oxide and a binder resin, etc., onto a surface of a transparent plastic film and drying the applied film, and then, if necessary, curing it by heating or light irradiation using ultraviolet rays, X-ray, γ-ray or electron beam. The drying is preferably carried out by heating the resin composition applied onto the transparent plastic film to 60 to 150°C, especially 70 to 110°C. The drying time generally is in the range of 1 to 10 minutes. The light irradiation is carried out by using ultraviolet rays emitted from a lamp such as a super high-pressure lamp, a high-pressure lamp and a low-pressure mercury lamp, a carbon-arc lamp, a xenon-arc lamp, or a metal halide lamp.

Examples of the transparent plastic films include polyethylene terephthalate (PET) film, polyethylene naphthalate (PEN) film, polymethyl methacrylate (PMMA) film, polycarbonate (PC) film, polyethylene butyrate film. Particularly preferred is polyethylene terephthalate (PET), because it has high resistance to processing load such as heat, solvent and bending, and especially high transparency.
Further the surface of the transparent plastic film may be preliminarily subjected to adhesion treatment such as corona treatment, plasma treatment, flame treatment, primer layer coating treatment, in order to improve the adhesion of the surface. Otherwise, an adhesion layer of thermosetting resin such as copolymerized polyester resin or polyurethane resin may be provided. The thickness of the transparent plastic film generally is in the range of 1µm to 10mm, preferably 10 to 400µm, especially 20 to 200µm.

### [Heat-ray reflection layer]

The heat-ray reflection layer used in the solar control double glass is composed of metal oxide other than tungsten oxide and/or composite tungsten oxide. The useable metal oxide is those capable of transmitting selectively visible light and reflecting selectively heat-ray.

Examples of the metal oxides include tin oxide, tin-containing indium oxide (ITO), antimony-containing tin oxide (ATO), indium oxide, antimony-containing indium oxide, antimony oxide, magnesium oxide, silicon oxide, titanium oxide, cerium oxide, aluminum oxide, lanthanum oxide, neodymium oxide, and yttrium oxide. Of these metal oxides, preferred are tin oxide, antimony-containing tin oxide (ATO) and tin-containing indium oxide (ITO). The use of these metal oxides enables the formation of the heat-ray reflection layer having excellent durability. The metal oxide can be used singly or in combination of two or more kinds thereof.

The thickness of the heat-ray reflection layer preferably is in the range of 0.02 to 1µm, especially in the range of 0.05 to 0.1µm. Even such a thin heat-ray reflection layer enables to provide the solar control double glass having excellent heat-ray shielding properties by the combination of the heat-ray absorption layer as mentioned above.

To prepare the heat-ray reflection layer, physical vapor deposition method, chemical vapor deposition method, thermal spraying method and plating method can be used. Examples of the physical vapor deposition method include vacuum vapor deposition method, sputtering method and ion-plating method. Examples of the chemical vapor deposition (CVD) method include thermal CVD method, plasma CVD method and light CVD method. The method enables the formation of a hard film such as a diamond-like carbon film, a TiN film and a CrN film. Examples of the thermal spraying method include atmosphere plasma spraying method and vacuum plasma spraying method. Example of the plating method include non-electrolytic plating (chemical plating) method, hot-dip plating method and electroplating method. As electroplating method, laser plating method can be used.

As the heat-ray reflection layer, a low- emissive metal layer, which is known as Low-E film, can be used. The Low-E film enables the reduction of heat energy transfer caused by emission to impart heat-ray shielding properties to the double glass.

As the Low-E film, for example, a metal oxide layer/Ag layer/ metal oxide layer obtained by coating a metal oxide layer, an Ag layer and a metal oxide layer on a glass plate in this order, and a metal oxide layer/Ag layer/ metal oxide layer /Ag layer/ metal oxide layer obtained by coating a metal oxide layer, an Ag layer, a metal oxide layer, an Ag layer and a metal oxide layer on a glass plate in this order, can be used. The Low-E film having two Ag layers is capable of sharply enhancing reflection in the region of near infrared rays without the enhancement of reflection in the visible region, and therefore the use of the Low-E film having two Ag layers is preferred. Zinc oxide or tin oxide is used as the metal oxide.

The Low-E film contains a metal such as Ag. Hence, when moisture enters in the hollow layer by dew concentration, the metal is occasionally oxidized to suffer from rust. However, the solar control double glass can prevent occurrence of the dew concentration to avoid the Low-E film from its rusting.

### [Adhesive resin layer]

Examples of materials of the adhesive resin layer in the solar control double glass of the invention include ethylene copolymers such as ethylene/vinyl acetate copolymer (EVA), ethylene/(meth)acrylic acid copolymer, ethylene/ethyl (meth)acrylate copolymer, ethylene/methyl (meth)acrylate copolymer, metal-ion crosslinked ethylene/(meth)acrylic acid copolymer, partially saponified ethylene/vinyl acetate copolymer, carboxylated ethylene/vinyl acetate copolymer, ethylene/(meth)acrylic acid/maleic anhydride copolymer and ethylene/vinyl acetate/(meth)acrylate copolymer. The (meth)acrylic acid means acrylic acid and methacrylic acid and the (meth)acrylate means acrylate and methacrylate. Besides these polymers, there can be mentioned polyvinyl butyral (PVB) resin, epoxy resin, phenol resin, silicon resin, polyester resin, urethane resin, rubber adhesives, thermoplastic elastomer (TPE) such as SEBS (styrene/ethylene/butylene/styrene) and SBS (styrene/butadiene/styrene). The EVA is preferred for the adhesive resin layer because it shows excellent adhesion.

The content of vinyl acetate recurring unit of EVA used in the adhesive resin layer preferably is in the range of 23 to 38 parts by weight, especially 23 to 28 parts by weight based on 100 parts by weight of EVA. Thereby, the adhesive resin layer shows excellent adhesion and transparency. EVA preferably has Melt Flow Index (MFR) of 1.0 to 30.0g/10min., especially 1.5 to 5.0g/10min, which renders preliminary pressure bonding easy.

In case the adhesive resin layer uses ethylene copolymer, the ethylene copolymer preferably contains further an organic peroxide. The EVA is crosslinked or cured by the organic peroxide to combine with the adjacent layer(s), these plate and layer(s) being united.

Preferred examples of the organic peroxides include 2,5-dimethylhexane-2,5-dihydroperoxide, 2,5-dimethyl-2,5-(t-butylperoxy)hexane, di-t-butylperoxide, t-butylcumyl peroxide, 2,5-dimethyl-2,5-di(t-butylperoxy)hexane, dicumyl peroxide, α,α'-bis(t-butylperoxyisopropyl)benzene, n-butyl-4,4-bis(t-butylperoxy)valerate, 1,1-bis(t-butylperoxy)cyclohexane, 1,1-bis(t-butylperoxy)-3,3,5-trimethylcyclohexane, t-butylperoxybenzoate, benzoyl peroxide, t-butylperoxyacetate, methyl ethyl ketone peroxide, 2,5-dimethylhexyl-2,5-bisperoxybenzoate, butyl hydroperoxide, p-menthane hydroperoxide, p-chlorobenzoyl peroxide, hydroxyheptyl peroxide, chlorohexanone peroxide, octanoyl peroxide, decanoyl peroxide, lauroyl peroxide, cumyl peroxyoctoate, succinic acid peroxide, acetyl peroxide, m-toluoyl peroxide, t-butylperoxyisobutylate and 2,4-dichlorobenzoyl peroxide.
The adhesive resin layer preferably contains further a crosslinking auxiliary or a silane coupling agent for enhancing the adhesive strength.

Examples of crosslinking auxiliaries include esters of plural acrylic acids or methacrylic acids with polyhydric alcohol such as glycerol, trimethylol propane or pentaerythritol; and further triallyl cyanurate and triallyl isocyanurate.

Examples of the silane coupling agents include γ-chloropropylmethoxysilane, vinyltriethoxysilane, vinyl-tris(β-methoxyethoxy)silane, γ-methacryloxypropyltrimethoxysilane, vinyltriacetoxysilane, γ-glycidoxypropyltrimethoxysilane, γ-glycidoxypropyltriethoxysilane, β-(3,4-epoxycyclohexyl)ethyltrimethoxysilane, vinyltrichlorosilane, γ-mercaptopropyltrimethoxysilane, γ-aminopropyltriethoxysilane, N-β-(aminoethyl)-γ-aminopropyltrimethoxysilane. The silane coupling agents can be used singly, or in combination of two or more kinds. The content of the silane coupling agent is preferably in an amount of not more than 5 parts by weight based on 100 parts by weight of ethylene copolymer.

The adhesive resin layer including EVA preferably contains acryloxy group-containing compounds, methacryloxy group-containing compounds, epoxy group-containing compounds, plasticizers, ultraviolet absorbers for improvement or adjustment of various properties of the layer (e.g., mechanical strength, adhesive property (adhesion), optical characteristics such as transparency, heat resistance, light-resistance, cross-linking rate), particularly for improvement mechanical strength.

The thickness of the adhesive resin layer preferably is in the range of 100 to 2,000µm, especially 400 to 1,000µm.

The adhesive resin layer including EVA can be prepared, for example, by molding a composition including EVA and an organic peroxide, etc., by a conventional molding process such as extrusion molding or calendaring molding (calendaring) to form a product in the form of layer. The mixing of the composition is preferably carried out by kneading the composition under heating at 40 to 90°C, especially 60 to 80°C. Further, the formation of a film (layer) is preferably carried out at such temperature that the organic peroxide does not have reaction or scarcely has reaction. For example, the temperature is preferably set to the range of 40 to 90°C, especially 50 to 80°C. The adhesive resin layer may be formed directly on a surface of a plastic film or a glass plate. Otherwise a sheet of the adhesive resin layer (i.e., in the form of film) may be used for the formation of the adhesive resin layer.

In the solar control double glass 100 of the invention, in order to bond the glass plate 11 to the heat-ray absorption layer 14 formed by coating a heat-ray absorber on a plastic film, the adhesive resin layer 18 is interposed between these layers to form a laminate, which is then degassed, and the laminate is pressed under heating (preferably 40 to 200°C for 1 to 120 minutes, especially 60 to 150°C for 1 to 20 minutes), the pressure being preferably 1.0×10³ to 5.0×10⁷Pa, to be bonded and united with each other. These steps can be carried out, for example, by using vacuum package system or nip rollers system.

For example, in case EVA is used as the adhesive resin layer 18, EVA is generally crosslinked at 100 to 150°C (especially approx. 130°C) for 10 minutes to 1 hour. This crosslinking is carried out by degassing the laminate, preliminarily bonding it under pressure, for example, at a temperature of 80 to 120°C and heating it at 100 to 150°C (especially approx. 130°C) for 10 minutes to 1 hour. Cooling after the crosslinking is generally carried out at room temperature. The cooling is preferably fast.

### [Glass plate]

The glass plate of the invention may be any transparent substrates.
For example, glass plates such as a green glass plate, a silicate glass plate, an inorganic glass plate and a colorless transparent glass plate, and a substrate or plate of plastic film as well can be used. Examples of the plastic include polyethylene terephthalate (PET), polyethylene naphthalate (PEN), polyethylene butyrate and polymethyl methacrylate (PMMA). A glass plate is preferred in view of weather resistance and impact resistance. The thickness of the glass plate generally is in the range of 1 to 20mm.

### [Others]

As the hollow layer, for example, an air layer, an inert gas layer, and a decompression can be used. The use of the hollow layer enables enhancement of thermal insulation properties required in the double glass, and simultaneously suppression of time degradation of the heat-ray absorption layer. The hollow layer may be a layer having a dried air obtained by adding a desiccant in the spacer 22. The inert gas layer contains an inert gas such as krypton gas, argon gas or xenon gas. The decompression layer preferably has a pressure of not more than 1.0Pa, especially 0.01 to 1.0Pa. The thickness of the hollow layer is preferably in the range of 6 to 12mm. The desiccant is preferably incorporated in the spacer arranged for forming the hollow layer, which further ensures prevention of occurrence of dew concentration.

As the grazing channel corresponding to material for interposition used when a double glass is mounted on a sash frame, any materials made of rubber or plastic which have been used in the past can be employed. Particularly preferred are grazing channels having high sealing property and preventing exterior air or water from entering. The grazing channel has concave in its sectional view, and the periphery part of the double glass is fitted into this concave portion to be installed in a window frame.

The solar control double glass of the invention may have various function layers such as a neon emission absorbing layer, an ultraviolet ray absorption layer, besides the heat-ray reflection layer and the heat-ray absorption layer

The neon emission absorbing layer (neon cut layer) is a layer containing neon-emission selective absorption dyes. Examples of the neon-emission selective absorption dyes include polyphiline dyes, azapolyphiline dyes, cyanine dyes, squalirium dyes, anthraquinone dyes, phthalocyanine dyes, polymethine dyes, polyazo dyes, azulenium dyes, diphenylmethane dyes, triphenylmethane dyes. The neon-emission selective absorption dyes are required to have neon-emission selective absorption function at wavelength of approx. 585nm and small absorption in a wavelength range of visible light except the wavelength. Hence, the dyes preferably have absorption maximum wavelength of 560 to 610nm, and half bandwidth of absorption spectrum of 40nm or less.

The ultraviolet ray absorbing layer is a layer containing an ultraviolet absorber. Examples of the ultraviolet absorber include benzophenone compounds, benzotriazole compounds, triazine compounds, benzoate compounds, hindered amine compounds, salicylic acid compounds, cyanoacrylate compounds.

These layers may be provided as separated layers depending upon properties (solubility, reactivity, etc.) of the compounds, and otherwise the mixture of the various compounds may be formed as one layer. Dyes for coloring and antioxidants may be further added into theses layers so long as they do not have a large influence on the layers.

The shape of the solar control double glass of the invention includes various shapes such as rectangle, circle and rhombus, and the shape is selected depending upon use applications. The solar control double glass can be used in wide applications such as a widow glass for building and vehicle (automobile, rail car, marine vessel), an electronic device such as a plasma display, and a door or wall portion of various devices such as refrigerator and thermal insulation system.

In case the solar control double glass of the invention is used for a widow glass for building and vehicle in cold regions such as relatively high-latitude region, the solar control double glass is preferably arranged such that the heat-ray absorption layer is placed on the outdoor side while the heat-ray reflection layer placed on the indoor side. Thereby, infrared rays emitted from a heater in the indoor is retained by reflection (thermal insulating properties) to enhance the heating efficiency. The solar control double glass of the invention is excellent in thermal insulation properties, and therefore effectively used in cold regions.

In contrast, in case the solar control double glass of the invention is used in temperate regions such as relatively low-latitude region, the solar control double glass is preferably arranged such that the heat-ray absorption layer is placed on the indoor side while the heat-ray reflection layer is placed on the outdoor side. Thereby sun light and near infrared rays emitted from the solar light or outdoor can be effectively shielded. EXAMPLE

Examples are set forth below to explain the present invention in detail.

### 1. Preparation of heat-ray absorption layer

A composition having the following components was applied onto a PET film (thickness: 125µm) with a bar coater, and dried in an oven at 80°C for 2 minutes, and then was exposed to ultraviolet ray by a high-pressure mercury lamp in the condition of integral of UV light of 500mJ/cm². Thereby a heat-ray absorption layer having thickness of 8µm was formed on the PET film.

| (Composition for forming heat-ray absorption layer (part(s): part(s) by weight)) | |
|---|---|
| Dipentaerythritol hexaacrylate | |
| Photopolymerization initiator | |
| (Irgacure (registered trademark) 184 available from Ciba specialty chemicals) | |
| Cs_{0.03}WO₃ (mean particle size: 80nm) | 20 parts |
| Methyl isobutyl ketone | 300 parts |

### 2. Preparation of heat-ray reflection layer

A zinc oxide film (thickness: 50nm), a silver film (thickness: 10nm), a titanium oxide film (thickness: 2nm) and a zinc oxide film (thickness: 50nm) were formed on a float glass (thickness: 3mm) in this order by using a direct current sputtering device according to in-line system to form a heat-ray reflection layer. The sputtering of the zinc oxide film was carried out in a vacuum condition of 0.4Pa with the introduction of argon and oxygen in flow volume ratio of 1:9, while the sputtering of the other films was carried out in a vacuum condition of 0.4Pa with the introduction of only argon. The zinc oxide film, the silver film and the titanium oxide film were formed by using zinc, silver and titanium as a target, respectively. The titanium oxide film was prepared by forming a titanium film and oxidizing the film in the next step forming the zinc oxide film. As the film-forming conditions (applied voltage, film-forming time period, etc.), the conditions preliminarily confirmed so as to have the above-mentioned thicknesses were used.

### 3. Preparation of adhesive resin layer

A composition having the following formulation was rolled by calendaring to prepare an adhesive resin layer (thickness: 400µm) in the form of sheet. The kneading of the composition was carried out at 80°C for 15 minutes, and the temperature of the calendar roll was 80°C and its processing rate was 5m/min.

| | |
|---|---|
| | |

| (Formulation of adhesive resin layer (parts: parts by weight)) | |
|---|---|
| EVA | |
| (content of vinyl acetate based on 100 parts of EVA: 25 wt. %, available from Tosoh Corporation): | 100 parts |
| Crosslinker | 2.5 parts |
| (t-butylperoxy-2-ethylhexyl monocarbonate; available from NOF Corporation): | |
| Crosslinking auxiliary (triallyl isocyanurate; TAIC (registered trademark) available from Nippon Kasei Chemical Co., Ltd.) | 2 parts |
| Silane coupling agent | |
| (γ-methacryloxypropyltrimethoxysilane; available from Shin-Etsu Chemical Co., Ltd.): | 0.5 part |

### 4. Unification by combining PET film having heat-ray absorption layer to glass plate

The adhesive resin layer and the PET film having heat-ray absorption layer as prepared above were laminated on a glass plate (thickness: 3 mm) in this order. The resultant laminate was temporarily bonded under pressure by heating at 100°C for 30 minutes, and then heated in an autoclave under pressure of 13×10⁵Pa at 140°C for 30 minutes. Thereby, the adhesive resin layer was cured and hence the glass plate and the transparent plastic film (PET film) were combined to be united.

### [Example 1]

A solar control double glass was prepared, the double glass being composed of a float glass 11 (thickness: 3mm), the adhesive resin layer 18 (thickness: 400µm), the heat-ray absorption layer 14 (thickness: 133µm), the hollow layer 20 (thickness: 6mm) and a float glass 12 (thickness: 3mm) having the heat-ray reflection layer 16 (thickness: 112nm) thereon which are arranged from outdoor side in this order such that the heat-ray absorption layer 14 faces the heat-ray reflection layer 16, as shown in Fig. 1. The hollow layer 20 was formed by facing and arranging the heat absorption layer 14 and the heat-ray reflection layer 16 with each other through a spacer 22 containing a desiccant provided on the outer peripheral part of the4 layers and bonding the layers and the spacer using butyl rubber. The outer peripheral part of the resultant solar control double glass 100 is fixed on a grazing channel.

### [Example 2]

A solar control double glass was prepared, the double glass being composed of a float glass 11 (thickness: 3mm), the adhesive resin layer 18 (thickness: 400µm), the heat-ray absorption layer 14 (thickness: 133µm), the adhesive resin layer 19 (thickness: 400µm), a float glass 13 (thickness: 3mm), the hollow layer 20 (thickness: 6mm) and a float glass 12 (thickness: 3mm) having the heat-ray reflection layer 16 (thickness: 112nm) thereon which are arranged from outdoor side in this order such that the float glass 13 faces the heat-ray reflection layer 16, as shown in Fig. 2. The hollow layer 20 was formed by facing and arranging the float glass 13 and the heat-ray reflection layer 16 with each other through a spacer containing a desiccant provided on the outer peripheral part and bonding the layers and the spacer using butyl rubber. The outer peripheral part of the resultant solar control double glass 200 is fixed on a grazing channel.

### [Example 3]

A solar control double glass 300 was prepared, the double glass being fixed in a grazing channel such that the float glass 11 is the indoor side and the float glass 12 is the outdoor side, which is arrangement opposite to that of Example 1, as shown in Fig. 3.

### [Example 4]

A solar control double glass 400 was prepared, the double glass being fixed in a grazing channel such that the float glass 11 is the indoor side and the float glass 12 is the outdoor side, which is arrangement opposite to that of Example 2, as shown in Fig. 4.

### [Comparison Example 1]

Two float glasses 110, 120 (3mm) were faced to each other through a spacer 220 containing a desiccant to form a hollow layer 210, as shown in Fig. 5. The outer peripheral part of the resultant double glass 50 was fixed in a grazing channel 240.

### [Comparison Example 2]

The same heat-ray reflection layer 160 as that of Examples 1-4 was formed on a surface on the hollow layer side of the indoor side glass of the double glass of Comparison Example 1 to prepare a double glass 60, as shown in Fig. 6. The resultant double glass 60 was fixed in a grazing channel 240.

### [Evaluation method]

Each of the double glasses as prepared above is fixed in a simulated building, and an outdoor air temperature and an indoor air temperature are set as set forth in Tables 1 and 2. And a temperature on the outdoor side of glass and a temperature on the indoor side of glass are measured every six hours. Further, a thermal transmission coefficient (U value) is calculated according to JIS R 3107.

### 1. Existence or non-existence of occurrence of dew concentration

The double glass is detached from the grazing channel. The surface of the inside of the grazing channel is observed by using a loupe, and existence or non-existence of occurrence of dew concentration (water droplet) is investigated.

### 2. Measurement of heating load

Electric power of a heater for maintaining the indoor temperature to 23°C is measured and indicated as heating load (kWh) per 24 hours.

**[Table 1]**

| | Example 1 | | | | Example 2 | | | | Example 3 | | | |
|---|---|---|---|---|---|---|---|---|---|---|---|---|
| | 0 a.m. | 6 a.m. | 12 a.m. | 18 a.m. | 0 a.m. | 6 a.m. | 12 a.m. | 18 a.m. | 0 a.m. | 6 a.m. | 12 a.m. | 18 a.m. |
| Outdoor Air Temperature (°C) | 0 | -5 | 5 | 3 | 0 | -5 | 5 | 3 | 0 | -5 | 5 | 3 |
| Temperature on outdoor side of glass(°C) | 13 | 11 | 17 | 16 | 13 | 11 | 19 | 17 | 11 | 9 | 16 | 15 |
| Temperature on indoor side of glass(°C) | 23 | 23 | 23 | 23 | 23 | 23 | 23 | 23 | 23 | 23 | 23 | 23 |
| Indoor Air Temperature (°C) | 23 | 23 | 23 | 23 | 23 | 23 | 23 | 23 | 23 | 23 | 23 | 23 |
| U value (Thermal transmission coefficient) | 2.3 | | | | 2.3 | | | | 2.4 | | | |
| Dew (in grazing channel) | None | None | None | None | None | None | None | None | None | None | None | None |
| Heating Load (kWh) per 24hours | 100 | | | | 100 | | | | 100 | | | |

**[Table 2]**

| | Example 4 | | | | Com. Example 1 | | | | Com. Example 2 | | | |
|---|---|---|---|---|---|---|---|---|---|---|---|---|
| | 0 a.m. | 6 a.m. | 12 a.m. | 18 a.m. | 0 a.m. | 6 a.m. | 12 a.m. | 18 a.m. | 0 a.m. | 6 a.m. | 12 a.m. | 18 a.m. |
| Outdoor Air Temperature (°C) | 0 | -5 | 5 | 3 | 0 | -5 | 5 | 3 | 0 | -5 | 5 | 3 |
| Temperature on outdoor side of glass(°C) | 11 | 9 | 17 | 15 | 0 | -3 | 2 | 1 | 0 | -2 | 2 | 3 |
| Temperature on indoor side of glass(°C) | 23 | 23 | 23 | 23 | 23 | 23 | 23 | 23 | 23 | 23 | 23 | 23 |
| Indoor Air Temperature (°C) | 23 | 23 | 23 | 23 | 23 | 23 | 23 | 23 | 23 | 23 | 23 | 23 |
| U value (Thermal transmission coefficient) | 2.4 | | | | 3.3 | | | | 2.6 | | | |
| Dew (in grazing channel) | None | None | None | None | Existence | Existence | Existence | Existence | Existence | Existence | None | None |
| Heating Load (kWh) per 24hours | 100 | | | | 160 | | | | 140 | | | |

### [Evaluation of results]

Temperature on the outdoor side of glass of Examples 1 to 4 is kept to be lower than that of Comparison Examples 1 and 2. Particularly, even at 6 a.m. showing the lowest outdoor air temperature, it is confirmed that the outdoor air temperature of Examples are not apt to decrease. Further, though Comparison Examples 1 and 2 show occurrence of dew (dew concentration) in the grazing channel, Examples 1 to 4 do not show occurrence of dew. Furthermore, heating load (kWh) per 24hours of Examples 1 to 4 is decreased compared with that of Comparison Examples 1 and 2.

The above-mentioned results indicate that the solar control double glass having a structure arranged in Examples 1 to 4 enables prevention of occurrence of dew and of reduction of heating load.

### [Industrial applicability]

It is possible to provide a solar control double glass capable of preventing occurrence of dew and decrease heating load.

### Explanation of reference number

11, 12, 13 Glass plate
14 Heat-ray absorption layer
16 Heat-ray reflection layer
18, 19 Adhesive resin layer
20 Hollow layer
22 Spacer
24 Grazing cannel
100, 200, 300, 400 Solar control double glass

## Claims

1. A solar control double glass which comprises two glass plates (A), (B) superposed through a spacer therebetween, a gap between the two glass plates forming a hollow layer,
wherein an adhesive resin layer and a heat-ray absorption layer comprising a tungsten compound are provided on a surface on the hollow layer side of one glass plate (A) in this order, and a heat-ray reflection layer is provided on a surface on the hollow layer side of another glass plate (B).

2. A solar control double glass as defined in claim 1, wherein another glass plate (C) is further provided on a surface on the hollow layer side of the heat-ray absorption layer through an adhesive resin layer.

3. A solar control double glass as defined in claim 1 or 2, wherein a desiccant is incorporated in the spacer.

4. A solar control double glass as defined in any of claims 1 to 3, wherein the tungsten compound is tungsten oxide and/or composite tungsten oxide.

5. A solar control double glass defined in claim 4, wherein the tungsten oxide is represented by a general formula W_{y}O_{z} wherein W represents tungsten, O represents oxygen, and y and z satisfy the condition of 2.2≤z/y≤2.999, and the composite tungsten oxide is represented by a general formula MₓW_{y}O_{z} wherein M represents at least one element selected from H, He, alkaline metals, alkaline-earth metals, rare-earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi and I, W represents tungsten, O represents oxygen, and x, y and z satisfy the conditions of 0.001≤x/y≤1 and 2.2≤z/y≤3.

6. A solar control double glass as defined in claim 5, wherein M is cesium.

7. A solar control double glass as defined in any of claims 1 to 6, wherein the heat-ray reflection layer comprises at least a laminate of a metal oxide layer, a silver-containing layer and a metal oxide layer.

8. A solar control double glass as defined in any of claims 1 to 7, wherein the adhesive resin layer comprises ethylene-vinyl acetate copolymer as a major ingredient.

9. A method for the installation of a solar control double glass as defined in any of claims 1 to 8, wherein a peripheral part of the solar control double glass is fixed on a grazing channel to be installed on a window frame
